Europäisches Patentamt

European Patent Office

Office européen des brevets

(11) Veröffentlichungsnummer: **0 415 015 A1**

# EUROPÄISCHE PATENTANMELDUNG

(21) Anmeldenummer: 90111276.3

(22) Anmeldetag: 15.06.90

(51) Int. Cl.⁵: **A61C 13/00**

(30) Priorität: 01.09.89 DE 3928967

(43) Veröffentlichungstag der Anmeldung:
06.03.91 Patentblatt 91/10

(84) Benannte Vertragsstaaten:
**AT BE CH DE DK ES FR GB GR IT LI LU NL SE**

(71) Anmelder: **SCHÜTZ-DENTAL GMBH**
**Homburger Strasse 64**
**W-6365 Rosbach(DE)**

(72) Erfinder: **Wagner, Markus**
**Friedenstrasse 1**
**W-6380 Bad Homburg(DE)**

(74) Vertreter: **Schlagwein, Udo, Dipl.-Ing.**
**Anwaltsbüro Ruppert & Schlagwein**
**Frankfurter Strasse 34**
**W-6350 Bad Nauheim(DE)**

(54) Objektträger für dentaltechnische Objekte.

(57) Ein Objektträger für in einem Lichthärtegerät zu polymerisierende Objekte ist als lichtdurchlässige Druckkammer ausgebildet. Hierzu ist eine lichtdurchlässige Glocke (3) luftdicht auf eine Grundplatte (2) geschraubt, auf welcher das Objekt (1) aufliegt. Innerhalb dieser Glocke (3) kann über ein Druckeinlaßventil (7) beispielsweise mittels einer Luftpumpe Überdruck erzeugt werden.

## OBJEKTTRÄGER FÜR DENTALTECHNISCHE OBJEKTE

Die Erfindung bezieht sich auf einen Objektträger für in einem Lichthärtegerät durch Lichtpolymerisation zu härtende, dentaltechnische Objekte, insbesondere Zahnprothesen oder Zahnprothesenteile, welcher eine Auflage für die Objekte aufweist.

Zum Härten von dentaltechnischen Objekten, insbesondere Zahnprothesen oder Zahnprothesenteile, setzt man häufig Lichthärtegeräte ein, in denen das Objekt auf einem als Tablett ausgebildeten Objektträger eingeschoben und dann von Lampen des Lichthärtegerätes angestrahlt werden. Für die Qualität der auszuhärtenden Objekte wäre es vorteilhaft, wenn die Polymerisation unter Druck erfolgen könnte. Bekannt sind deshalb auch schon Lichthärtegeräte geworden, welche nach außen hin hermetisch zu verschließen sind, so daß nach dem Einbringen eines Objektes im Lichthärtegerät Überdruck erzeugt werden kann.

Das Lichtpolymerisieren unter Druck erforderte bisher relativ aufwendige und umständlich zu handhabende Lichthärtegeräte als die Lichtpolymerisation unter Normaldruck. Deshalb begnügt man sich in der Dentaltechnik meist mit den mit Atmosphärendruck arbeitenden Geräten und verzichtet auf die durch Überdruck erreichbaren, besseren Materialeigenschaften.

Der Erfindung liegt die Aufgabe zugrunde, einen Objektträger der eingangs genannten Art so auszubilden, daß die Lichtpolymerisation dentaler Objekte unter Überdruck möglich ist, ohne daß es hierzu eines speziellen Lichthärtegerätes bedarf.

Diese Aufgabe wird erfindungsgemäß dadurch gelöst, daß der Objektträger als lichtdurchlässige, in das Lichthärtegerät einsetzbare Druckkammer ausgebildet ist.

Durch diese Gestaltung des Objektträgers kann man ausschließlich den Objektträger mit dem zuvor in ihm eingebrachten Objekt unter Überdruck setzen und danach diesen Objektträger wie einen üblichen Objektträger in ein einfaches, mit Normaldruck arbeitendes Lichthärtegerät einbringen. Dank der Erfindung wird es somit mit äußerst einfachen Mitteln möglich, dentale Objekte unter Überdruck zu polyerisieren, ohne daß es hierzu eines speziellen Lichthärtegerätes bedarf. Damit läßt sich für Dentallabors mit geringem, einmaligem Kostenaufwand die Qualität der lichtgehärteten Objekte verbessern.

Besonders einfach ist der Objektträger gestaltet, wenn er aus einer zur Auflage des Objektes ausgebildeten Grundplatte und einer dichtend darauf zu befestigenden Glocke besteht.

Die luftdichte Befestigung der Glocke auf der Grundplatte kann mit einfachen Mitteln und leicht durchführbar erfolgen, wenn gemäß einer anderen Ausgestaltung der Erfindung die Glocke am Rand ihrer Außenmantelfläche ein Gewinde zum Einschrauben in ein entsprechendes Gewinde der Grundplatte hat.

Der gewünschte Druck kann in der Glocke mit einfachsten Mitteln, beispielsweise einer von Hand zu betätigenden Luftpumpe, erzeugt werden, wenn die Glocke mit einem Manometer, einem Sicherheitsventil und einem Druckeinlaßventil ausgestattet ist.

Vorteilhaft ist es auch, wenn die Glocke als Lichtfilter ausgebildet ist. Man kann dann durch eine Einfärbung der Glocke nur das Licht einer Lampe zum Objekt gelangen lassen, welches für die Polymerisation des jeweiligen Werkstoffes vorteilhaft ist.

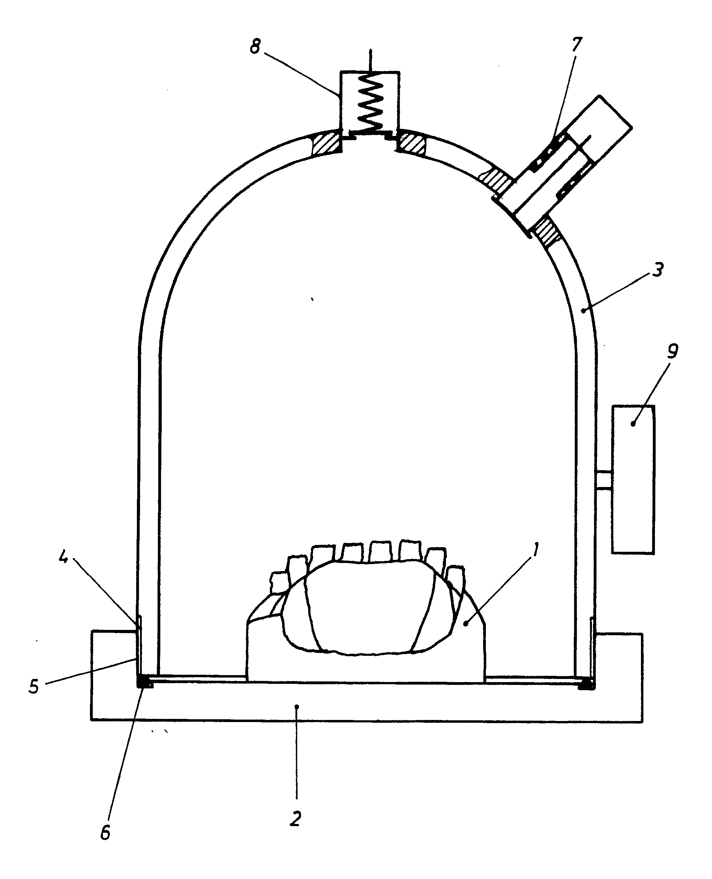

Die Erfindung läßt zahlreiche Ausführungsbeispiele zu. Zur weiteren Verdeutlichung ihres Grundprinzips ist eines davon in der Zeichnung im Schnitt dargestellt und wird nachfolgend beschrieben.

Der in der Zeichnung dargestellte Qbjektträger ist als Druckkammer ausgebildet und hat eine als Auflage für ein jeweils lichtzuhärtendes Objekt 1 dienende, aus lichtdurchlässigem Material bestehende Grundplatte 2 und eine darin von oben her eingesetzte, ebenfalls lichtdurchlässige Glocke 3. Diese Glocke 3 hat an ihrem unteren Rand ein Außengewinde 4, so daß sie in ein entsprechendes Innengewinde 5 der Grundplatte 2 geschraubt werden kann. Ein Dichtring 6 stellt sicher, daß diese Schraubverbindung luftdicht ist.

Um den Objektträger mit Überdruck beaufschlagen zu können, hat die Glocke 3 ein Druckeinlaßventil 7, an welches eine Luftpumpe oder eine Druckmittelleitung angeschlossen werden kann. Ein als Sicherheitsventil ausgebildetes Überdruckventil 8 verhindert den Aufbau eines unzulässig hohen Überdruckes innerhalb der Glocke 3. An einem Manometer 9 kann der in dem Objektträger erzeugte Druck abgelesen werden.

Der beschriebene Objektträger kann mit einem in ihm eingesetzten Objekt 1 in ein übliches Lichthärtegerät eingebracht werden. Da er lichtdurchlässig ist, gelangt das Licht des Lichthärtegerätes ungestört zum Objekt 1. Da dieses jedoch von Überdruck umgeben ist, läßt sich ein homogeneres Material erzeugen, als wenn die Polymerisa tion unter Normaldruck erfolgen würde.

In der vorstehenden Beschreibung wurde davon ausgegangen, daß im Objektträger Überdruck erzeugt wird. Selbstverständlich ist es auch möglich, für andere Anwendungsfälle oder Werkstoffe das Objekt im Objektträger Unterdruck auszusetzen, indem man die Glocke 3 evakuiert.

Auflistung der verwendeten Bezugszeichen

    1 Objekt
    2 Grundplatte
    3 Glocke
    4 Außengewinde
    5 Innengewinde
    6 Dichtring
    7 Druckeinlaßventil
    8 Überdruckventil
    9 Manometer


**Ansprüche**

1. Objektträger für in einem Lichthärtegerät durch Lichtpolymerisation zu härtende, dentaltechnische Objekte, insbesondere Zahnprothesen cder Zahnprothesenteile, welcher eine Auflage für die Objekte aufweist, dadurch gekennzeichnet , daß der Objektträger (Grundplatte 2, Glocke 3) als lichtdurchlässige, in das Lichthärtegerät einsetzbare Druckkammer ausgebildet ist.

2. Objektträger nach Anspruch 1, dadurch gekennzeichnet , daß der Objektträger aus einer zur Auflage des Objektes (1) ausgebildeten Grundplatte (2) und einer dichtend darauf zu befestigenden Glocke (3) besteht.

3. Objektträger nach Anspruch 2, dadurch gekennzeichnet , daß die Glocke (3) am Rand ihrer Außenmantelfläche ein Außengewinde (4) zum Einschrauben in ein entsprechendes Innengewinde (5) der Grundplatte (2) hat.

4. Objektträger nach zumindest einem der vorangehenden Ansprüche, dadurch gekennzeichnet , daß die Glocke (3) mit einem Manometer (9), einem Sicherheitsventil (8) und einem Druckeinlaßventil (7) ausgestattet ist.

5. Objektträger nach zumindest einem der vorangehenden Ansprüche, dadurch gekennzeichnet , daß die Glocke (3) als Lichtfilter ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 428 688 (PAULI) <br> * Anspruch 1; Seite 4, Zeilen 3-9; Figur 1 * | 1,2 | A 61 C 13/00 |
| | - - - | | |
| A | EP-A-0 090 948 (ESPE FABRIK) <br> * Seite 7, Zeile 15 * | 1,4 | |
| | - - - | | |
| A | US-A-2 487 620 (WALLER) <br> * Spalte 2, Zeilen 40-42 * | 3 | |
| | - - - | | |
| A | FR-A-6 611 90 (DÜRST) <br> * Seite 1, Zeilen 44-49 * | 4 | |
| | - - - - - | | |

**RECHERCHIERTE SACHGEBIETE (Int. Cl.5)**

A 61 C
G 01 N
B 01 L

Der vorliegende Recherchenbericht wurde für alle Patentansprüche erstellt

| Recherchenort | Abschlußdatum der Recherche | Prüfer |
|---|---|---|
| Den Haag | 12 November 90 | VLECK J.M. |